# EUROPÄISCHE PATENTANMELDUNG

(11) **EP 4 781 812 A1**
(43) Veröffentlichungstag der Anmeldung: **29.07.2026**
(21) Anmeldenummer: 25153393.1
(22) Anmeldetag: 22.01.2025
(51) Int. Cl.: A01D 34/14

(54) **MÄHMESSERVORRICHUNG UND MÄHMESSERVORRICHTUNGSSYSTEM MIT EINER SOLCHEN**

(71) Anmelder: Wepfer Technics AG, 8450 Andelfingen (CH)
(72) Erfinder: WEPFER, Hans, 8450 Andelfingen (CH)
(74) Vertreter: Keller Schneider Patent- und Markenanwälte AG

(57) **Zusammenfassung**

Erfindungsgemäss wird eine Mähmesservorrichtung mit einem Doppelmesser-Schneidsystem angegeben. Dabei weist das Doppelmesser-Schneidsystem ein oberes Schneidmesser und ein unteres Schneidmesser auf, welche mittels eines seitlichen Antriebs in einer Klingenbewegungsrichtung relativ zueinander bewegbar ausgebildet sind. Das obere Schneidmesser und/oder das untere Schneidmesser weist jeweils ein Verbindungselement zum Übertragen einer Antriebsbewegung mittels eines seitlichen Antriebs auf. Das Verbindungselement umfasst dabei ein zylindrisches Gleitlager, welches sowohl eine Rotationsgleitbewegung und eine Axialgleitbewegung zulässt. Ferner wird ein erfindungsgemässes Mähmesservorrichtungssystem mit einer solchen angegeben.

## Beschreibung

### Technisches Gebiet

Die Erfindung betrifft eine Mähmesservorrichtung mit einem Doppelmesser-Schneidsystem, das ein oberes Schneidmesser und ein unteres Schneidmesser aufweist, welche mittels eines seitlichen Antriebs in einer Klingenbewegungsrichtung relativ zueinander bewegbar ausgebildet sind, und ein Mähmesservorrichtungssystem mit einer solchen.

### Stand der Technik

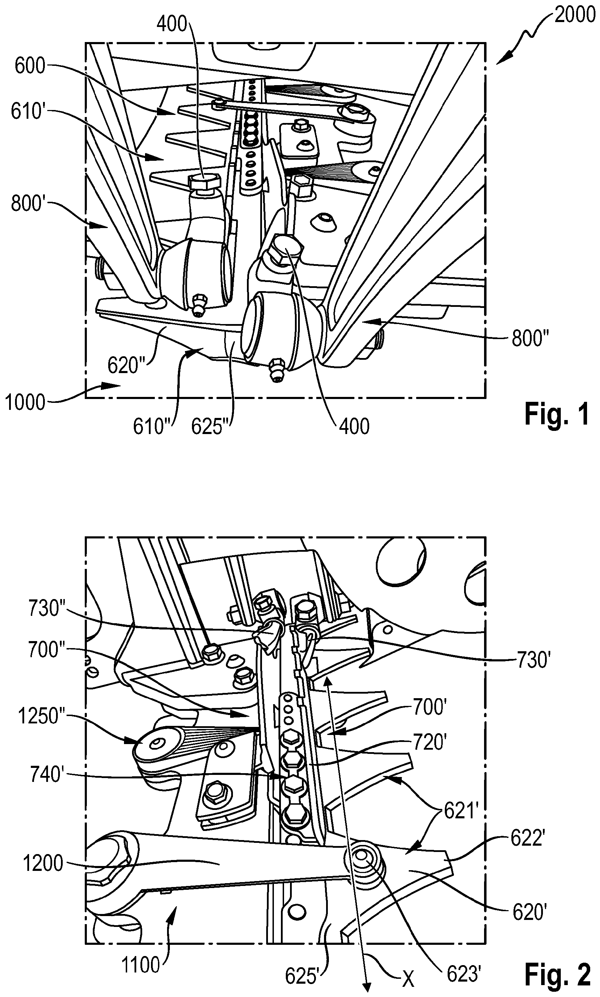

Aus dem Stand der Technik sind Mähmesservorrichtungen mit einem Doppelmesser-Schneidsystem 600, das ein oberes Schneidmesser 610' und ein unteres Schneidmesser 610" aufweist, bekannt. Figur 1 zeigt ein solches Doppelmesser-Schneidsystem 600 einer Mähmesservorrichtung 1000, welches ein oberes Schneidmesser 610' und ein unteres Schneidmesser 610" umfasst, und insbesondere eine Verbindung zwischen Verbindungsarmen 800', 800", die von einem seitlichen Antrieb (nicht gezeigt) kommen, mittels herkömmlicher Verbindungselemente zu dem oberen Schneidmesser 610' und dem unteren Schneidmesser 610". Das obere Schneidmesser 610' und das untere Schneidmesser 610" werden mittels des seitlichen Antriebs (nicht gezeigt) relativ zueinander bewegt.

Zusätzlich ist dem oberen Schneidmesser 610' und dem unteren Schneidmesser 610" der Mähmesservorrichtung 1000 jeweils ein auswechselbarer Messerkopf 700', 700" zugeordnet, um eine Antriebsbewegung von dem seitlichen Antrieb (nicht gezeigt) auf das Doppelmesser-Schneidsystem 600 zu übertragen. Der Messerkopf 700', 700" ist mittels eines Verbindungsabschnitts 740', 740" mit dem oberen bzw. unteren Schneidmesser 610', 610" und mittels eines Anschlusses 730', 730"mit dem seitlichen Antrieb verbindbar bzw. verbunden.

Der Verbindungsabschnitt 740'ist in der dargestellten Ausführungsform mittels Schrauben und Nieten an dem oberen Schneidmesser 610' fixiert.

In Figur 1 ist ferner eine Verbindung des oberen und unteren Schneidmessers 610', 610" mit den jeweiligen zu dem seitlichen Antrieb führenden und dessen Antriebskräfte übertragenden Verbindungsarmen 800', 800" über bekannte Verbindungselemente gezeigt. Es ist bekannt, die Verbindung von dem Schneidmesser zu einem Verbindungsglied des seitlich angeordneten Antriebs über ein herkömmliches Verbindungselement auszubilden, in dem ein Kugelgelenk angeordnet ist, um die Kraft- und Kraftrichtungsübertragung von dem seitlich angeordneten Antrieb auf das Schneidmesser zu ermöglichen. Im Betrieb werden das obere Schneidmesser 610' und das untere Schneidmesser 610" mittels des seitlichen Antriebs relativ zueinander bewegt.

Figur 2 zeigt die Mähmesservorrichtung 1000 gemäss Figur 1 von der entgegengesetzten Seite aus. Es ist insbesondere das obere Schneidmesser 610' in Klingenbewegungsrichtung X gezeigt, während das untere Schneidmesser 610" in der in Figur 2 dargestellten Position nicht sichtbar ist.

Sowohl das obere Schneidmesser 610' als auch das untere Schneidmesser 610" sind jeweils über einen auswechselbaren Messerkopf 700', 700" über entsprechende Verbindungsarme 800', 800" mit dem seitlichen Antrieb verbunden. Der Anschluss 730' des oberen Messerkopfs 700' ist in einem dem oberen Schneidmesser 610' zugeordneten Verbindungselement 100' aufnehmbar bzw. aufgenommen. Entsprechend ist der Anschluss 730" des unteren Messerkopfs 700" in einem dem unteren Schneidmesser 610" zugeordneten Verbindungselement 100" aufgenommen. Die Anschlüsse 730', 730" der Messerköpfe 700', 700" können in den zugehörigen Verbindungselementen mittels entsprechender Fixiereinrichtungen 400, insbesondere Schrauben, fixiert werden. Gemäss den bekannten Verbindungselementen, wie sie in Figuren 1 und 2 dargestellt sind, bringen die Fixiereinrichtungen 400 eine Klemmkraft auf die in entsprechenden mittig ausgebildeten Aufnahmen der Verbindungselemente aufgenommenen Anschlüsse 730', 730" der Messerköpfe 700', 700" auf. Insbesondere werden die Enden der Fixiereinrichtungen 400 gemäss den bekannten Verbindungselementen zentral, d.h. mittig, auf die jeweiligen Anschlüsse 730', 730" der Messerköpfe 700', 700" gepresst.

Für ein gutes und sauberes Schnittergebnis ist es nötig, dass das obere und untere Schneidmesser 610', 610" anliegend und aneinander in der Schneidebene gleitend angeordnet sind. Wenn bei einem Mähvorgang mechanische Belastungen, wie beispielsweise wenn das Doppelmesser-Schneidsystem 600 auf Steine oder Erdansammlungen stösst, auf das untere und obere Schneidmesser 610', 610" wirken, können sich die Schneidmesser 610', 610" durch die mechanische Belastung oder abgesehen davon auch aufgrund von Kräften, die während des Betriebs aufgrund der vorherrschenden hohen Geschwindigkeiten auf die Schneidmesser wirken, voneinander lösen.

Zum Beheben dieses Problems ist es bekannt, jeweils entlang der Länge des oberen und unteren Schneidmessers 610', 610" obere und untere Haltevorrichtungen 1200 anzuordnen, die das entsprechend zugehörige obere bzw. untere Schneidmesser 610', 610" mit einem Messerbalken 1100 verbinden und an diesem lagern. Über die oberen und unteren Haltevorrichtungen 1200 werden die oberen und unteren Schneidmesser 610', 610" mit einer Vorspannkraft belastet, welche die oberen und unteren Schneidmesser 610', 610" zueinander drückt.

Allerdings besteht weiterhin das Problem, dass in einem Bereich zwischen dem äußeren Ende des oberen bzw. unteren Schneidmessers 610', 610", an dem das obere und untere Schneidmesser 610', 610" mit dem zugehörigen Verbindungsarm 800', 800" zum seitlichen Antrieb verbunden ist, und einer ersten oberen Haltevorrichtung 1200 keine Vorspannkraft auf das obere und untere Schneidmesser 610', 610" aufgebracht werden kann. Mit anderen Worten, es kann zwischen der Aufnahme des Schneidmessers 610', 610" in dem Verbindungselement und einer in der Klingenbewegungsrichtung ersten oberen Haltevorrichtung 1200 eben keine solche Gegenkraft auf die Schneidmesser 610', 610"ausgeübt werden. Insbesondere ist es aufgrund des in dem Verbindungselement angeordneten Kugelgelenks nicht möglich, eine entsprechend gerichtete Kraft auf die Schneidmesser 610', 610" zu übertragen.

Somit besteht das Problem, dass sich das obere Schneidmesser 610' von dem unteren Schneidmesser 610" während des Betriebs der Mähmesservorrichtung 1000 lösen kann, z. B. bei mechanischen Stößen, weiterhin fort. Dies kann zu (abrupten) Mähunterbrechungen und hohem Verschleiss des seitlichen Antriebs sowie der Mähmesservorrichtung führen. Dies führt dazu, dass das Doppelmesser-Schneidsystem 600 nicht mehr schneiden kann und sich Gras, Schnittgut, Erde und/oder Steine zwischen und/oder in einem Bereich hinter den Schneidmessern 610', 610" ansammeln kann. Dies macht eine Wartung unabkömmlich. Durch die so entstehenden Reaktionskräfte auf sowohl das Doppelmesser-Schneidsystem 600 als auch auf den Antrieb kommt es zu einem grösseren Verschleiss der Einzelbestandteile der Mähmesservorrichtung 1000.

### Darstellung der Erfindung

Aufgabe der Erfindung ist es, ein besonders effizientes Konzept einer dem eingangs genannten technischen Gebiet zugehörenden Mähmesservorrichtung zu schaffen, welche die Nachteile und Schwierigkeiten des Standes der Technik überwindet. Insbesondere ist es die Aufgabe der Erfindung, eine Verbindung des Doppelmesser-Schneidsystems zum seitlichen Antrieb unanfälliger gegen Verunreinigung und Verschleiss zu gestalten.

Die der vorliegenden Erfindung zugrundeliegende Aufgabe wird erfindungsgemäss durch den Gegenstand des unabhängigen Patentanspruchs 1 gelöst. Ferner wird die Aufgabe durch den Gegenstand des nebengeordneten Anspruchs 12 gelöst. Vorteilhafte Weiterbildungen sind in den abhängigen Ansprüchen angegeben.

Erfindungsgemäss wird die zugrundeliegende Aufgabe durch eine Mähmesservorrichtung mit einem Doppelmesser-Schneidsystem gelöst. Dabei weist das Doppelmesser-Schneidsystem ein oberes Schneidmesser und ein unteres Schneidmesser auf, welche mittels eines seitlichen Antriebs in einer Klingenbewegungsrichtung relativ zueinander bewegbar ausgebildet sind. Das obere Schneidmesser und/oder das untere Schneidmesser weist jeweils ein Verbindungselement zum Übertragen einer Antriebsbewegung mittels eines seitlichen Antriebs auf. Das Verbindungselement umfasst dabei ein zylindrisches Gleitlager, welches sowohl eine Rotationsgleitbewegung und eine Axialgleitbewegung zulässt.

Vorteilhafterweise kann somit eine Mähmesservorrichtung geschaffen werden, bei der der benötigte Bauraum reduziert werden kann und gleichzeitig die zum Antrieb der oberen und unteren Schneidmesser benötigte Kräfte sicher weitergegeben werden können. Durch das Anordnen eines Gleitlagers anstelle des bekannten Kugelgelenks kann vorteilhafterweise der benötigte Bauraum verkleinert sowie Gewicht eingespart werden. Dies hat den weiteren Vorteil, dass die Trägheit des Systems, welche bei den im Betrieb vorherrschenden hohen Bewegungsfrequenzen vorliegt, vorteilhafterweise gesenkt werden kann und somit der seitliche Antrieb effizienter wirken kann. Dies reduziert den Verschleiss und somit damit verbundene Reparatur-, Wartungs- und Instandhaltungsarbeiten und - zeiten. Ferner kann die Nachhaltigkeit der Vorrichtung erhöht werden, da die Erfindung über einen Austausch der Verbindungselemente einfach und schnell nachrüstbar und in bestehende Vorrichtungen integrierbar ist. Es kann gegebenenfalls lediglich nötig sein, den Messerkopf auszuwechseln, um einen zu dem Verbindungselement passenden Anschluss bereitzustellen.

Gemäss einer vorteilhaften Weiterbildung der Mähmesservorrichtung weist das zylindrische Gleitlager eine Lagerachse auf, welche orthogonal zur Klingenbewegungsrichtung ausgerichtet ist.

Dies hat den Vorteil, dass die jeweiligen Schneidmesser besonders sicher gelagert sind.

Gemäss einer vorteilhaften Weiterbildung der Mähmesservorrichtung umfasst das zylindrische Gleitlager einen in dem zylindrischen Gleitlager gleitfähig gelagerten Zapfen, welcher form- und kraftschlüssig an einem seitlichen Antrieb fixierbar ist.

Insbesondere entspricht der Zapfen einem universell verwendbaren Element, welches auch bei spiegelverkehrt ausgerichteten Körpern der Verbindungselemente eingesetzt werden kann. So kann der Fertigungsaufwand begrenzt werden und die in dem zylindrischen Gleitlager aufgenommenen Zapfen sowohl für das dem oberen Schneidmesser als auch für das dem unteren Schneidmesser zugeordnete Verbindungselement verwendet werden. Auch kann dieser einfach und schnell gewechselt werden, wodurch ein einfacher und schneller Austauschvorgang möglich ist.

Gemäss einer Weiterbildung dieser Mähmesservorrichtung umfasst der Zapfen einen konisch geformten Abschnitt zum Einbringen in einen Verbindungsarm des seitlichen Antriebs.

Über die konisch geformte Kontur entsteht zwischen dem zu dem seitlichen Antrieb führenden Verbindungsarm ein gewisses Spiel, wodurch eine Relativbewegung zwischen dem Zapfen und dem Verbindungsarm erzielt wird. Dadurch kann vorteilhafterweise verhindert werden, dass sich der Zapfen im Betrieb verklemmt, was den Verschleiss der Mähmesservorrichtung erhöhen würde.

Nach einer bevorzugten Ausführungsform umfasst der Zapfen einen Anschlag, welcher angrenzend an den konisch geformten Abschnitt ausgebildet ist. Der Anschlag kann auch als Bund bezeichnet werden. Dieser dient der Positionierung des Verbindungselements an dem Verbindungsarm und kann gleichzeitig als Gleitfläche zu dem Verbindungsarm dienen.

Beispielsweise kann der Zapfen einen Hohlraum aufweisen. Dies hat den Vorteil, dass das Gewicht des Zapfens gesenkt werden kann. Dadurch kann wiederum vorteilhafterweise die Trägheit bei den im Betrieb vorherrschenden hohen Geschwindigkeiten gesenkt werden und damit der Verschleiss der Mähmesservorrichtung. Somit kann eine ruhigere Relativbewegung der Schneidmesser zueinander erzielt werden.

Beispielsweise kann zwischen dem zylindrischen Gleitlager und dem Zapfen eine Gleitbuchse angeordnet sein. Dies dient vorteilhafterweise der Verschleissreduktion. Ferner können die Fertigungstoleranzen zumindest des die Gleitbuchse aufnehmenden zylindrischen Gleitlagers entsprechend höhergesetzt werden, was die Fertigung vereinfacht.

Gemäss einer vorteilhaften Weiterbildung der Mähmesservorrichtung kann das Verbindungselement eine Aufnahme zum Anordnen des Verbindungselements an einem Messerkopf eines Schneidmessers aufweisen.

Dadurch kann der Messerkopf besonders sicher an dem Verbindungselement befestigt werden.

Beispielsweise kann das Verbindungselement eine Fixiereinrichtung zum Fixieren des in die Aufnahme eingebrachten Messerkopfs eines Schneidmessers aufweisen. Insbesondere ist denkbar, dass der Messerkopf dazu eine Kontur zum Wechselwirken mit der Fixiereinrichtung des Verbindungselements aufweisen kann.

Dadurch kann vorteilhafterweise eine Verklemmung des Anschlusses des Messerkopfes in der Aufnahme des Verbindungselements erzielt werden und damit eine kraft- und formschlüssige Verbindung die den Messerkopf gegen ungewolltes Lösen besonders sicher schützt.

Beispielsweise umfasst die Aufnahme eine im Wesentlichen parallel zur Klingenbewegungsrichtung ausgerichtete Aufnahmelängsachse, wobei die Fixiereinrichtung einen Gewindestift mit einer Gewindestiftlängsachse umfasst, und wobei die Gewindestiftlängsachse und die Aufnahmelängsachse voneinander beabstandet ausgebildet sind.

Dadurch lässt sich vorteilhafterweise ein Torsions-Effekt erzielen, der den Druck auf das obere und das untere Schneidmesser am Endbereich zum seitlichen Antrieb hin so erhöhen kann, dass die Schneidmesser gegeneinander vorgespannnt werden und ein Lösen der Schneidmesser voneinander besonders zuverlässig, insbesondere über die ganze Klingenlänge hinweg, verhindert werden kann. Mit anderen Worten, durch die aussermittig angeordnete Fixiereinrichtung wird der in der Aufnahme angeordnete Anschluss des Messerrückens nicht nur fixiert, sondern auch über ein Torsionsmoment belastet, welches das obere und untere Schneidmesser aneinanderdrückt.

Gemäss einer vorteilhaften Weiterbildung der Mähmesservorrichtung können das untere Schneidmesser ein unteres Verbindungselement und das obere Schneidmesser ein oberes Verbindungselement aufweisen, wobei das untere Verbindungselement und das obere Verbindungselement jeweils ein zylindrisches Gleitlager umfassen, welche sowohl eine Rotationsgleitbewegung und eine Axialgleitbewegung zulassen.

Dadurch können die vorab beschriebenen Effekte insbesondere auf beide Messerebenen entsprechend angewendet werden.

Beispielsweise können das untere Verbindungselement eine erste Führungsrippe und das obere Verbindungselement eine zweite Führungsrippe aufweisen, wobei die erste Führungsrippe und die zweite Führungsrippe zueinander ausgerichtete Gleitflächen aufweisen.

Vorteilhafterweise wird dadurch ein Verkanten der Verbindungselemente im Betrieb und damit eine ruckartige Unterbrechung der Schneidbewegung, welches aufgrund der hohen Kräfte mit gesteigertem Verschleiss verbunden wäre, verhindert werden.

Ferner wird die der Erfindung zugrundeliegende Aufgabe durch ein Mähmesservorrichtungssystem gelöst. Das Mähmesservorrichtungssystem weist eine voranstehend beschriebene Mähmesservorrichtung auf, wobei das obere Schneidmesser und das untere Schneidmesser jeweils einen Messerkopf zum Anordnen des oberen Verbindungselements und des unteren Verbindungselements aufweisen, wobei jeder Messerkopf eine Kontur zum Wechselwirken mit einer respektive der vorhergenannten Fixiereinrichtung des jeweiligen Verbindungselements umfasst.

Die vorab beschriebenen Vorteile sind somit auch auf das Mähmesservorrichtungssystem entsprechend übertragbar.

Gemäss einer vorteilhaften Weiterbildung des Mähmesservorrichtungssystem kann die Kontur als umlaufende Nut ausgebildet sein, wobei die Fixiereinrichtung zumindest teilweise in die umlaufende Nut einbringbar ist.

Dadurch kann der Messerrücken besonders vorteilhaft in der Aufnahme fixiert werden.

Gemäss vorteilhaften Weiterbildung dieses Mähmesservorrichtungssystems kann die Nut einen steileren Winkel aufweisen als ein Ende der Fixiereinrichtung, welches zumindest teilweise in die Nut einbringbar bzw. eingebracht ist.

Vorteilhafterweise wird eine Deformation des Messerkopfes erzielt, wodurch der Messerkopf in der Aufnahme zusätzlich über eine Verbiegung vorgespannt wird und der auf die Schneidmesser wirkende Torsionseffekt verbessert werden kann.

Gemäss einer vorteilhaften Weiterbildung ist in dem Verbindungselement zum Anordnen der Fixiereinrichtung eine Gewindebohrung zugeordnet, in welche die Fixiereinrichtung eingreifbar ist. Die Gewindebohrung ist somit koaxial zu der Fixiereinrichtung. Vorzugsweise ist die Gewindebohrung versetzt in einem Abstand zu der Aufnahmelängsachse der Aufnahme angeordnet, in welche der Messerkopf eines Schneidmessers einbringbar ist. Dabei kann sich die Gewindebohrung durch das ganze Verbindungselement hindurch erstrecken, wodurch das Verbindungselement durch Wenden um 180° entlang der Aufnahmelängsachse entweder für das obere und untere Schneidmesser verwendet werden kann. Die Aufnahme ist in einer Höhenrichtung parallel zu der Gewindestiftlängsachse, entlang derer sich die Gewindebohrung senkrecht zu der Aufnahmelängsachse erstreckt, zumindest im Wesentlichen mittig in dem Hauptkörper des Verbindungselements angeordnet. Dies erleichtert die den Zusammenbau der Mähmesservorrichtung.

Gemäss einer vorteilhaften Weiterbildung der Mähmesservorrichtung oder des Mähmesservorrichtungssystems, sind auf den Verbindungselementen Schmiernippel angeordnet, und zwar in einem dem zylindrischen Gleitlager entsprechenden Bereich, auf einer der Aufnahme abgewandten Seite des Verbindungselements, so dass die Schmiernippel im Betrieb keine Gefahr laufen, abgeschert werden zu können.

Ferner kann der Zapfen zwischen einem in dem Verbindungsarm aufgenommenen oder aufnehmbaren konisch geformten Abschnitt und dem zylindrisch geformten Abschnitt ein Anschlag ausgebildet sein. Dieser dient der Positionierung des Verbindungselements an dem Verbindungsarm und kann gleichzeitig als Gleitfläche zu dem Verbindungsarm dienen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die oben beschriebenen, unterschiedlichen und beispielhaften Merkmale können erfindungsgemäss miteinander kombiniert werden, soweit dies technisch sinnvoll und geeignet ist. Weitere Merkmale, Vorteile und Ausführungsformen der Erfindung ergeben sich aus der nachfolgenden Beschreibung von Ausführungsbeispielen und anhand der Figuren.

Die zur Erläuterung der Ausführungsbeispiele verwendeten Zeichnungen zeigen in:
- Fig. 1: eine schematische Seitenansicht einer Mähmesservorrichtung mit herkömmlichen Verbindungselementen;
- Fig. 2: eine schematische Seitenansicht der Mähmesservorrichtung aus Fig. 1 aus der entgegengesetzten Richtung;
- Fig. 3: eine schematische Ansicht auf Verbindungselemente gemäss einer ersten Ausführungsform der Erfindung,
- Fig. 4: eine schematische Draufsicht auf die Verbindungselemente gemäss einer weiteren Ausführungsform der Erfindung;
- Fig. 5: eine schematische Darstellung der Verbindungselemente gemäss einer weiteren Ausführungsform; und
- Fig. 6: eine schematische Darstellung der Mähmesservorrichtung mit Verbindungselementen gemäss einer weiteren Ausführungsform der Erfindung.

Grundsätzlich sind in den Figuren gleiche Teile mit gleichen Bezugszeichen versehen. Im Folgenden bezeichnen mit «'» versehene Bezugszeichen das dem Bezugszeichen entsprechende Element, das einem oberen Schneidmesser einer Doppelmesser-Schneidvorrichtung zugeordnet ist, und mit «"» versehene Bezugszeichen entsprechend das dem Bezugszeichen entsprechende Element, das einem unteren Schneidmesser der Doppelmesser-Schneidvorrichtung zugeordnet ist.

### Wege zur Ausführung der Erfindung

Die vorliegende Erfindung basiert auf verbesserten Verbindungselementen 100, 100', 100" für eine eingangs beschriebene Mähmesservorrichtung 1000, welche das obere und untere Schneidmesser 610' 610" des Doppelmesser-Schneidsystems 600 mit zugehörigen Verbindungsarmen 800', 800" zum seitlichen Antrieb verbinden. Im Betrieb werden das obere Schneidmesser 610' und das untere Schneidmesser 610" mittels des seitlichen Antriebs, beispielsweise eines einseitig ausgebildeten Kurbelwellenantriebs, relativ zueinander bewegt. Die eingangs beschriebenen Elemente der Mähmesservorrichtung 1000 und des Doppelmesser-Schneidsystems 600 können weiterverwendet werden. Gegebenenfalls ist lediglich der austauschbare Messerkopf 700', 700" zu wechseln, um einen passenden Anschluss 730', 730" für die erfindungsgemäßen Verbindungselemente 100, 100', 100" bereitzustellen. Somit sind die erfindungsgemäßen Verbindungselemente 100, 100', 100" einfach und schnell in bestehende Mähmesservorrichtungen 1000 und Mähmesservorrichtungssysteme 2000 einbaubar und integrierbar. Dies ermöglicht eine zügige und unkomplizierte Nachrüstung von und Integration in bestehende Systeme, was die Nachhaltigkeit vorteilhafterweise erhöht.

Sowohl das obere Schneidmesser 610' als auch das untere Schneidmesser 610" der in Figur 1 gezeigten Mähmesservorrichtung 1000 haben jeweils mehrere Klingenelemente 620', 620", die über einen Messerrücken 625', 625" miteinander verbunden ausgebildet sind. Somit sind die Klingenelemente 620', 620" und der Messerrücken 625', 625" als gemeinsames integrales Bauteil ausgebildet. Beispielsweise werden sie aus einem Flachstahl ausgestanzt, wodurch die Herstellung sehr preiswert ist. Alternativ könnten die Klingenelemente 620', 620" aber auch separat gefertigt und einzeln mit dem Messerrücken 625', 625" verbunden werden.

Der in Figuren 1 und 2 gezeigte Messerkopf 700', 700" hat einen elastischen Abschnitt 720', 720", welcher zwischen einem Verbindungsabschnitt 740', 740" des Messerkopfs 700', 700" mit dem oberen bzw. unteren Schneidmesser 610', 610" und einem Anschluss 730', 730" zum Verbinden mit dem seitlichen Antrieb ausgebildet ist.

Der gesamte Messerkopf 700', 700" mit Verbindungsabschnitt 740', 740", elastischem Abschnitt 720', 720" und Anschluss 730', 730" ist aus einem Stück gefertigt. Beispielsweise kann auch der Messerkopf 700', 700" aus einem Flachstahl hergestellt werden, wodurch auch der elastische Abschnitt 720', 720" aus Metall hergestellt ist. Der elastische Abschnitt 720', 720" kann insbesondere eine Dämpfungsfunktion in einer Ebene realisieren, welche parallel zu der durch die Klingenelemente 620', 620" des oberen bzw. unteren Schneidmessers 610', 610" definierten Ebene ausgebildet ist.

Der Verbindungsabschnitt 740'ist in der dargestellten Ausführungsform mittels Schrauben und Nieten an dem oberen Schneidmesser 610' fixiert. Zusätzlich kann der Verbindungsabschnitt 740'des Messerkopfs 700' ein Eingreifelement (nicht gezeigt), welches zum Eingreifen in eine korrespondierende Eingreifaufnahme (nicht gezeigt) im Messerrücken 625' des oberen Schneidmessers 610' vorgesehen ist. Der untere Messerkopf 700" und das untere Schneidmesser 610" können auch entsprechend ausgebildet sein.

Wie bereits beschrieben, umfassen sowohl das obere Schneidmesser 610' als auch das untere Schneidmesser 610', 610" jeweils mehrere Klingenelemente 620', 620", die über den oberen bzw. unteren Messerrücken 625', 625" miteinander verbunden und als gemeinsames integrales Bauteil ausgebildet sind. Hierbei hat jedes Klingenelement 620', 620" zwei V-förmig ausgebildete Schneidkanten 621', 621". An einer Vorderseite jedes Klingenelements 620', 620" ist die Schneidkante 621', 621" durch eine abgeflachte Schneidmesserspitze 622', 622" unterbrochen.

Die Schneidkante 621', 621" eines ersten Klingenelements 620', 620" und die gegenüberliegende Schneidkante 621', 621" eines benachbarten Klingenelements 620', 620" können sich kontinuierlich über den Messerrücken 625', 625" erstrecken, wodurch die Schneidkante 621', 621" über den Messerrücken 625', 625" durchgehend ausgebildet ist. Alternativ ist es grundsätzlich auch denkbar, dass die Klingenelemente 620', 620" separat gefertigt und einzeln mit dem entsprechenden Messerrücken 625', 625" verbunden sind.

Auf einer Oberseite eines Klingenelements 620' des oberen Schneidmessers 610' befindet sich ein Schneidmesserlager 623' in Form eines Zapfens, welcher in einer Öffnung einer oberen Haltevorrichtung 1200 aufnehmbar bzw. aufgenommen ist. Das Schneidmesserlager 623' dient der Verbindung des oberen Schneidmessers 610' mit der oberen Haltevorrichtung 1200. Mittels der oberen Haltevorrichtung 1200 ist das obere Schneidmesser 610' mit einem Messerbalken 1100 verbunden. Insbesondere kann die obere Haltevorrichtung 1200 dabei über eine in einer Führungsbuchse angeordnete Zugfeder (nicht gezeigt) mit dem Messerbalken 1100 so verbindbar bzw. verbunden sein, dass eine Anpresskraft des oberen Schneidmessers 610' an das untere Schneidmesser 610" einstellbar ist. Das obere Schneidmesser 610' ist in dem Schneidmesserlager 623' der oberen Haltevorrichtung 1200 geführt.

Eine ähnlich ausgebildete untere Haltevorrichtung (nicht in den Figuren dargestellt) ist zwischen dem Messerbalken 1100 und einem unteren Schneidmesserlager in Form eines Zapfens, der auf einer Unterseite eines Klingenelements des unteren Schneidmessers 610" angeordnet ist. Im Gegensatz zu der oberen Haltevorrichtung ist die untere Haltevorrichtung ohne Federelement fest mit dem Messerbalken 1100 verbunden.

Das obere Schneidmesser 610' kann mittels der oberen Haltevorrichtung 1200 mit dem Messerbalken 1100 verbunden sein. Insbesondere ist die obere Haltevorrichtung 1200 an dem Messerbalken 1100 gelagert. Die Führungsbuchse (nicht gezeigt) lässt die notwendige Beweglichkeit der oberen Haltevorrichtung 1200 gegenüber dem Messerbalken 1100 zu, die während des Betriebs der Mähmesservorrichtung 1000 durch die Relativbewegung des Doppelmesser-Schneidsystems 600 auftritt.

Neben der oberen Haltevorrichtung 1200 kann sich eine untere Haltevorrichtung mit einem leicht zugänglichen Schraubenkopf 1250" befinden, welcher mit einer Schraube (nicht gezeigt) verbunden ist. Die Schraube dient dem Fixieren der unteren Haltevorrichtung an dem Messerbalken 1100. Insbesondere verbindet die untere Haltevorrichtung das untere Schneidmesser 610" mit dem Messerbalken 1100.

Entlang der Länge der oberen und unteren Schneidmesser 610', 610" können mehrere obere bzw. untere Haltevorrichtungen 1200, insbesondere die oberen Haltevorrichtungen 1200 versetzt zu den unteren Haltevorrichtungen, in vorab festlegbaren oder festgelegten Abständen angeordnet sein, um den Anpressdruck über die gesamte Länge der Schneidmesser 610', 610" aufrechterhalten zu können. Beispielsweise kann jedes dritte oder jedes vierte Klingenelement 620' des oberen Schneidmessers 610' ein Schneidmesserlager 623' auf der Oberfläche aufweisen, wobei jeweils zugehörige obere Haltevorrichtungen 1200 das obere Schneidmesser 610' mit dem Messerbalken 1100 entsprechend verbinden. Analog kann das jedes dritte oder jedes vierte Klingenelement 620" des unteren Schneidmessers 610" ein entsprechendes Schneidmesserlager 623" aufweisen, wobei jeweils zugehörige untere Haltevorrichtungen das untere Schneidmesser 610" mit dem Messerbalken 1100 entsprechend verbinden.

Sowohl das obere Schneidmesser 610' als auch das untere Schneidmesser 610" sind jeweils über den auswechselbaren Messerkopf 700', 700" über entsprechende Verbindungsarme 800', 800" mit dem seitlichen Antrieb verbunden, wobei die Messerköpfe 700', 700" jeweils über ein zugehöriges Verbindungselement 100, 100', 100" an den zugehörigen Verbindungsarmen 800', 800" fixierbar bzw. fixiert sind. Jeder der beiden Messerköpfe 700', 700", also der Messerkopf 700' des oberen Schneidmessers 610' und der Messerkopf 700" des unteren Schneidmessers 610", hat einen elastischen Abschnitt 720', 720", welcher zwischen einem Verbindungsabschnitt 740', 740" des Messerkopfs 700', 700" mit dem korrespondierenden Schneidmesser 610', 610" und einem Anschluss 730', 730" zur Verbindung mit dem seitlichen Antrieb angeordnet ist.

Der Anschluss 730' des oberen Messerkopfs 700' ist in einem dem oberen Schneidmesser 610' zugeordneten Verbindungselement 100' aufnehmbar bzw. aufgenommen. Entsprechend ist der Anschluss 730" des unteren Messerkopfs 700" in einem dem unteren Schneidmesser 610" zugeordneten Verbindungselement 100" aufgenommen. Die Anschlüsse 730', 730" der Messerköpfe 700', 700" können in den zugehörigen Verbindungselementen mittels entsprechender Fixiereinrichtungen 400, bspw. Gewindestifte 400a, insbesondere Schrauben, fixiert werden. Gemäss den bekannten Verbindungselementen, wie sie in Figuren 1 und 2 dargestellt sind, bringen die Fixiereinrichtungen 400 eine Klemmkraft auf die in entsprechenden mittig angeordneten Aufnahmen der bekannten Verbindungselemente aufgenommenen Anschlüsse 730', 730" der Messerköpfe 700', 700" auf, wobei die Enden der Fixiereinrichtungen 400 gemäss den bekannten Verbindungselementen zentral auf die jeweiligen Anschlüsse 730', 730" der Messerköpfe 700', 700" gepresst werden.

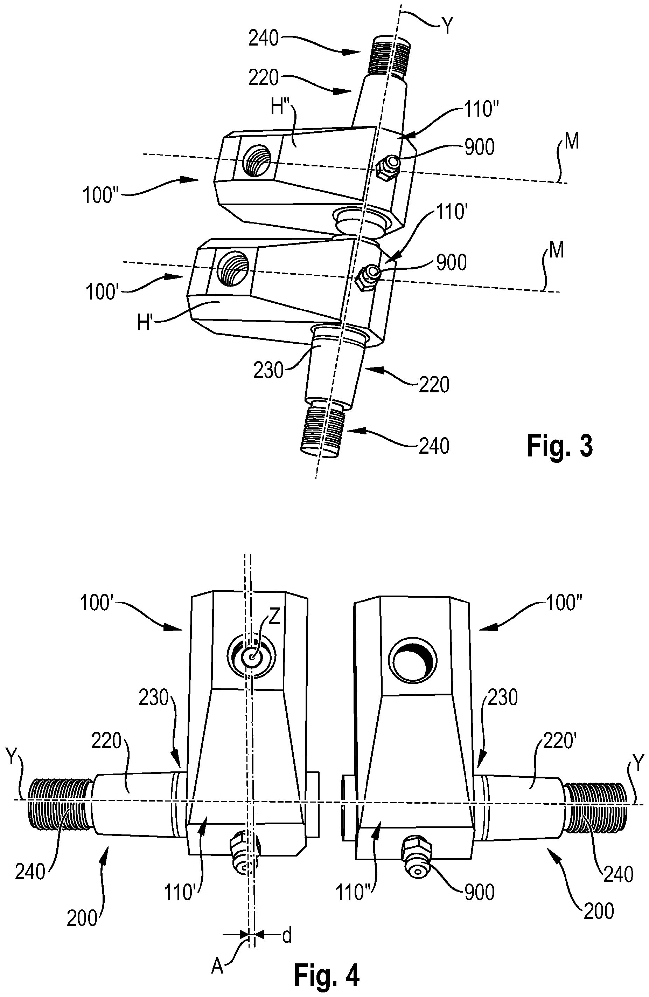

Figur 3 zeigt erfindungsgemässe Verbindungselemente 100, 100', 100" gemäss einer ersten Ausführungsform zur Verbindung des oberen bzw. unteren Schneidmessers 610', 610" mit dem zugehörigen Verbindungsarm 800', 800" des seitlichen Antriebs, welche die zuvor beschriebenen herkömmlichen Verbindungselemente ersetzen. Mit anderen Worten, das Doppelmesser-Schneidsystem 600 mit dem oberen Schneidmesser 610' und dem unteren Schneidmesser 610" kann wie vorab beschrieben weiterverwendet werden und ebenso der seitliche Antrieb und dessen Verbindungsarme 800', 800". Somit können die erfindungsgemässen Verbindungselemente 100, 100', 100" einfach und schnell in bestehende Mähmesservorrichtungen 1000 und Mähmesservorrichtungssysteme 2000 integriert werden. Dies ermöglicht eine kostengünstige Nachrüstbarkeit.

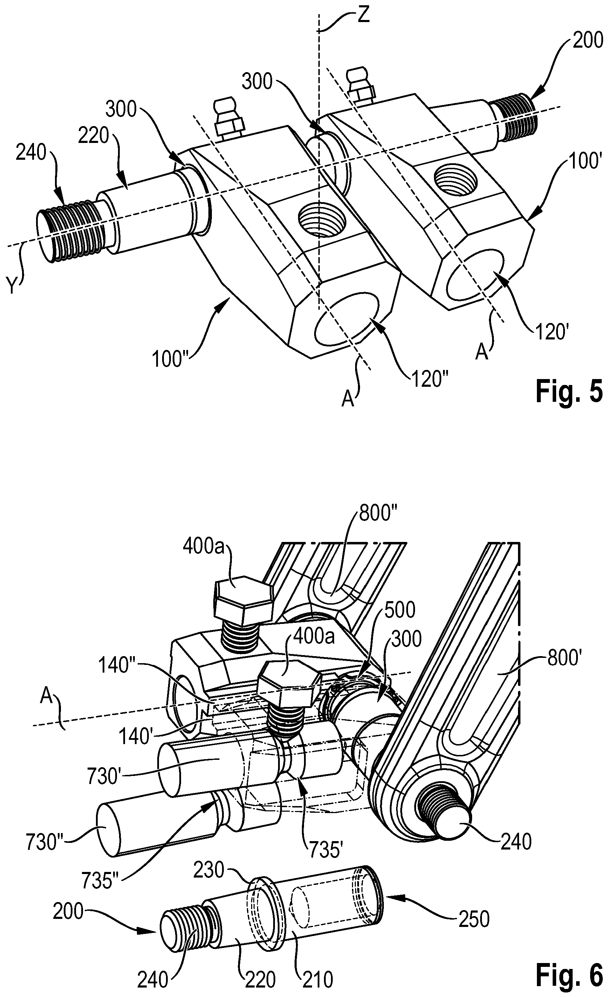

Die Verbindungselemente 100, 100', 100" sind zueinander, insbesondere entlang einer zwischen den Verbindungselementen 100, 100', 100" angeordneten Parallelen zu einer Mittellinie M eines Hauptkörpers H der Verbindungselemente 100, 100', 100", spiegelsymmetrisch ausgebildet. Die Mittellinie M des Hauptkörpers H verläuft zumindest im Wesentlichen mittig in der Höhenrichtung (d.h. parallel zu einer Gewindestiftlängsachse Z, die in Figuren 4 und 5 dargestellt ist) und mittig in der Breitenrichtung (d.h. parallel zu einer Lagerachse Y eines zylindrischen Gleitlagers 110, die in Figuren 4 und 5 dargestellt ist) und im eingebauten Zustand des Verbindungselements 100, 100', 100" zumindest im Wesentlichen parallel zu der Klingenbewegungsrichtung X. Die Verbindungselemente 100, 100', 100" weisen jeweils den Hauptkörper H auf, in welchem eine Aufnahme 120 ausgebildet ist, in welcher der Anschluss 730', 730" des zugehörigen Messerrückens 625', 625" aufnehmbar oder aufgenommen ist. Die Aufnahme 120 erstreckt sich jeweils entlang einer Aufnahmelängsachse A, welche zumindest im Wesentlichen parallel zu der Klingenbewegungsrichtung X verläuft. Gemäss einer Ausführungsform kann die Aufnahme 120 zentral in den Hauptkörper H ausgebildet sein, so dass die Aufnahmelängsachse A zumindest im Wesentlichen der Mittellinie M des Hauptkörpers H des Verbindungselements 100, 100', 100" entsprechen kann.

In dem Hauptkörper H des jeweiligen Verbindungselements 100, 100', 100" ist ferner ein zylindrisches Gleitlager 110 ausgebildet. Das zylindrische Gleitlager 110 erstreckt sich entlang einer Lagerachse Y des zylindrischen Gleitlagers 110, die zumindest im Wesentlichen orthogonal bzw. senkrecht zu der Aufnahmelängsachse A und somit im eingebauten Zustand orthogonal zu der Klingenbewegungsrichtung X verläuft.

Innerhalb des zylindrischen Gleitlagers 110 ist jeweils ein Zapfen 200 zumindest bereichsweise aufnehmbar oder aufgenommen. Insbesondere ist der Zapfen 200 in dem zylindrischen Gleitlager 110 des Verbindungselements 100, 100', 100" derart gelagert, dass er sowohl in radialer als auch in axialer Richtung eine Gleitbewegung ausführen kann. Der Zapfen 200 wird nachfolgend in Bezug auf Figur 6 genauer beschrieben.

Gemäss der in Figur 3 dargestellten Verbindungselemente 100, 100', 100" sind die Zapfen 200 gegengleich in den zugehörigen Verbindungselementen 100, 100', 100" angeordnet. Im eingesetzten Zustand erstreckt sich zumindest ein konisch geformter Abschnitt 220 und ein daran angrenzender Befestigungsabschnitt 240 auf einer ersten Seite des Hauptkörpers H aus dem Hauptkörper H des zugehörigen Verbindungselements 100, 100', 100". Der konisch geformte Abschnitt 220 des Zapfens 200 ist dazu ausgebildet, in einer, insbesondere zylindrischen, Öffnung in dem zugehörigen Verbindungsarm 800', 800" zum seitlichen Antrieb aufnehmbar oder aufgenommen zu sein.

Mittels der Befestigungsabschnitte 240 können die Verbindungselemente 100, 100', 100" an den zugehörigen Verbindungsarmen 800', 800" zum seitlichen Antrieb befestigt werden. Insbesondere kann je eine Mutter mit optionalen Gleit- und/oder Beilagscheiben nach dem Durchführen durch den zugehörigen Verbindungsarm 800', 800" auf den entsprechenden Befestigungsabschnitt 240 geschraubt werden zum Befestigen des Verbindungselements 100, 100', 100" an dem Verbindungsarm 800', 800".

In Figur 3 ist ferner ein Anschlag 230 des Zapfens 200 angedeutet, welcher benachbart zu dem Befestigungsabschnitt 240 angeordnet ist. Im an den Verbindungsarmen 800', 800" befestigtem Zustand wird der jeweilige Verbindungsarm 800', 800" zum seitlichen Antrieb zwischen dem Anschlag 230 und der aufgesetzten Mutter mit oder ohne zwischen der Mutter und dem Verbindungsarm 800', 800" aufgesetzten Gleit- und/oder Beilagscheiben mit dem zugehörigen Verbindungselement 100, 100', 100" form- und kraftschlüssig verbunden.

In den Bereichen der Hauptkörper H der Verbindungselemente 100, 100', 100", in welchen die Aufnahmen 120 zum Aufnehmen der entsprechenden Anschlüsse 730', 730" der oberen und unteren Messerköpfe 700', 700" ausgebildet sind, sind in Figur 3 ferner Gewindebohrungen dargestellt. Die Gewindebohrungen sind von einem im eingebauten Zustand von oben entlang einer Gewindestiftlängsachse Z, die zumindest im Wesentlichen senkrecht oder orthogonal zu der Aufnahmelängsachse A bzw. der Klingenbewegungsrichtung X verläuft, in den Hauptkörper H einbracht und erstrecken sich so weit, dass sie sich, insbesondere vollständig, bis in die Aufnahme 120 hinein erstrecken.

Wie dies insbesondere in Figur 4 angedeutet ist, ist die Gewindestiftlängsachse Z von der Aufnahmelängsachse A versetzt angeordnet. Mit anderen Worten, ein Abstand d wird zwischen der Aufnahmelängsachse A und der Gewindestiftlängsachse Z gebildet. Zur Verdeutlichung dieses Abstands ist in Figur 4 eine strich-punktierte Linie parallel zu der Aufnahmelängsachse A, die die Gewindestiftlängsachse Z schneidet, gezeigt. Anders ausgedrückt die Aufnahmelängsachse A und die Gewindestiftlängsachse Z verlaufen senkrecht in dem Abstand d zueinander und schneiden sich nicht.

Mit anderen Worten die Gewindebohrung in dem Hauptkörper H ist ausserzentrisch angeordnet, so dass der Hauptkörper H des oberen Verbindungselements 100' nicht identisch zu dem Hauptkörper H des unteren Verbindungselements 100" ausgebildet ist, sondern spiegelverkehrt. Die damit verbundenen Effekte und insbesondere der Torsions-Effekt werden nachstehend in Verbindung mit Figur 5 genauer beschrieben.

Die erfindungsgemässen Verbindungselemente 100, 100', 100" weisen ferner jeweils einen Schmiernippel 900 auf, der im Bereich des zylindrischen Gleitlagers 110 des jeweiligen Hauptkörpers H angeordnet ist. Gemäss der Ausführungsform, die in Figur 3 gezeigt ist, ist der Schmiernippel 900 an einem Bereich auf der der Aufnahme 120 abgewandten Seite des Hauptkörpers H und im eingebauten Zustand des Verbindungselements 100, 100', 100" nach oben versetzt angeordnet. Im Unterschied dazu sind die Schmiernippel 900 gemäss der in Figur 4 dargestellten Verbindungselemente 100, 100', 100" auch auf der der Aufnahme 120 abgewandten Seite des Hauptkörpers H aber im eingebauten Zustand weiter nach unten versetzt als in Figur 3 gezeigt, aber immer noch höher als eine von der Mittellinie M und der Lagerachse Y aufgespannte Mittelebene des Verbindungselements 100, 100', 100" angeordnet. Die exakte Position der Schmiernippel 900 ist nur dahingehend wichtig, dass sie dem Bereich angeordnet sind, an welchem das zylindrische Gleitlager 110 ausgebildet ist, und dass sie auf einer Seite angeordnet sind, an der sie vor mechanischen Einwirkungen anderer Elemente geschützt sind, so dass ein Abscheren aufgrund der Positionierung der Schmiernippel 900 nicht erfolgen kann.

Die in Figur 4 dargestellten Verbindungselemente 100, 100', 100" entsprechen abgesehen von der Positionierung der Schmiernippel 900 zumindest im Wesentlichen den in Figur 3 dargestellten Verbindungselementen 100, 100', 100".

In Figur 4 ist ein Bereich eines zylindrisch geformten Abschnitts 210 des Zapfens 200 dargestellt, welcher auf einer der ersten Seite des Hauptkörpers H gegenüberliegenden zweiten Seite des Hauptkörpers H aus diesem herausragt. Mit anderen Worten, der zylindrisch geformte Abschnitt 210 des Zapfens 200 ist breiter ausgebildet als die Breite des Hauptkörpers H des Verbindungselements 100, 100', 100".

Der zylindrisch geformte Abschnitt 210 des Zapfens 200 ist insbesondere in dem zylindrischen Gleitlager 110 des Hauptkörpers H des jeweiligen Verbindungselements 100, 100', 100" aufnehmbar oder aufgenommen. Somit kann der Hauptkörper H des jeweiligen Verbindungselements 100, 100', 100" in entlang des zylindrisch geformten Abschnitts 210 des Zapfens 200 in Radialrichtung und Axialrichtung eine Gleitbewegung ausführen.

Aufgrund der Befestigung der Verbindungselemente 100, 100', 100" mittels der in den jeweiligen Aufnahmen 120 aufgenommenen zugehörigen Messerköpfe 700', 700" ist eine seitliche Festlegung auf der dem konisch geformten Abschnitt 220 gegenüberliegenden Seite des zylindrisch geformten Abschnitts 210 nicht zwingend notwendig. Es ist aber denkbar, eine Nut (in Figuren 3 bis 5 nicht dargestellt) in dem zylindrisch geformten Abschnitt 210 an einem dem konisch geformten Abschnitt 220 gegenüberliegenden Ende auszubilden, in welche ein Befestigungselement 500, beispielsweise ein Sprengring, befestigbar ist, um die axiale Gleitbewegung zu begrenzen.

In Figur 5 sind Verbindungselemente 100, 100', 100" gemäss einer weiteren Ausführungsform aus einer anderen Perspektive gezeigt. Dabei entsprechen die in Figur gezeigten Verbindungselemente 100, 100', 100" zumindest im Wesentlichen den in Figur 3 und 4 gezeigten Verbindungselementen 100, 100', 100".

Beispielsweise ist in Figur 5 ersichtlich, dass zwischen den zylindrischen Gleitlagern 110 der jeweiligen Verbindungselemente 100, 100', 100" und den zylindrisch geformten Abschnitten 210 jeweils eine Gleitbuchse 300 angeordnet sein kann. Dadurch können die Fertigungstoleranzen bezüglich der Rauigkeit zwischen den zylindrischen Gleitlagern 110 der Hauptkörper H und den zylindrisch geformten Abschnitten 210 der Zapfen 200 der Verbindungselemente 100, 100', 100" höher gesetzt werden, wodurch der Fertigungsaufwand und die Fertigungskosten reduziert werden können.

Figur 5 zeigt eine schematische und perspektivische Ansicht der Verbindungselemente 100, 100', 100" mit in den Hauptkörpern H ausgebildeten Aufnahmen 120, in welche jeweils der zugehörige Anschluss 730', 730" des unteren Messerkopfs 700" bzw. des oberen Messerkopfs 700' aufnehmbar oder aufgenommen ist.

Wie in Figur 5 ersichtlich ist, erstreckt sich die Aufnahmelängsachse A, insbesondere nach unten und seitlich, versetzt zu der Mittellinie M des Hauptkörpers H. Mit anderen Worten, die Aufnahmen 120 zum Aufnehmen der jeweiligen Anschlüsse 730', 730" der oberen und unteren Messerköpfe 700', 700" sind ausserzentrisch in den entsprechenden Hauptkörpern H angeordnet.

Gleichzeitig sind die Gewindestiftlängsachsen Z der jeweiligen Verbindungselemente 100, 100', 100" weiterhin versetzt in einem Abstand d zu den zugehörigen Aufnahmelängsachsen A angeordnet.

Durch das tiefere Anordnen der Aufnahmen 120 (d.h. den Versatz in Figur 5 jeweils in Richtung unten weg von den Gewindebohrungen) in den Hauptkörpern H der Verbindungselemente 100, 100', 100" kann erzielt werden, dass die zugehörigen Gewindebohrungen länger ausgebildet sind, wodurch darin befestigbare oder befestigte Fixiereinrichtungen 400, wie beispielsweise Gewindestifte 400a, insbesondere Schrauben, mehr Kraft zum Fixieren der jeweiligen in den Aufnahmen 120 aufgenommenen Anschlüssen 730', 730" der Messerköpfe 700', 700" auf die Anschlüsse 730', 730" aufgebracht werden kann. Dadurch kann die Verbindung und Fixierung der oberen und unteren Schneidmesser 610', 610" in den entsprechenden Verbindungselementen 100, 100', 100" verbessert werden.

Das seitlich versetzte Anordnen der Aufnahmen 120 in den Hauptkörpern H verstärkt den über den Abstand d zwischen der Aufnahmelängsachse A und der Gewindestiftachse Z erzeugten Torsions-Effekt. Dieser wird nachfolgend anhand eines Verbindungselements 100, 100' näher beschrieben, gilt allerdings entsprechend komplementär für das andere Verbindungselement 100, 100".

Insbesondere kann über den Abstand d zwischen der Aufnahmelängsachse A und der Gewindestiftachse Z mittels der in der Gewindebohrung befestigten Fixiereinrichtung 400, insbesondere ein Gewindestift 400a, bevorzugt eine Schraube, sowohl eine Fixierkraft, als auch über den Abstand d ein Moment, insbesondere ein Torsionsmoment, auf den in der Aufnahme 120 angeordneten Anschluss 730' des zugeordneten Messerkopfs 700' des oberen Schneidmessers 610' und somit das obere Schneidmesser 610' aufgebracht werden. Diese Kraft und das Moment führen zum einen dazu, dass das obere Schneidmesser 610'mittels des Anschlusses 730' des Messerkopfs 700' sicher in dem Verbindungselement 100' gehalten werden kann, und zum anderen führt, insbesondere das eingebrachte Moment, dazu, dass das obere Schneidmesser 610' in Richtung des unteren Schneidmessers 610" hin verspannt wird. Mit anderen Worten, kann mittels der erfindungsgemässen Verbindungselemente 100, 100', 100" das Doppelmesser-Schneidsystem 600 auch bereits in einem Bereich zwischen den Verbindungselementen 100, 100', 100" und den ersten oberen und unteren Halteeinrichtungen 1200 eine Vorspannkraft der beiden Schneidmesser 610', 610" zueinander erreicht werden. Dadurch kann vorteilhafterweise bereits in einem Bereich nahe des seitlichen Antriebs verhindert werden, dass sich die beiden Schneidmesser 610', 610" bei mechanischen Belastungen, wie zum Beispiel Stössen, Steinschläge oder das Auftreffen auf Erdhügel, voneinander lösen, und so der Schneidvorgang stossartig bzw. ruckartig unterbrochen wird. Dies reduziert vorteilhafterweise den Verschleiss der Schneidmesser 610', 610" und des seitlichen Antriebs. Das zusätzliche versetzte Anordnen der Aufnahme 120 in den Hauptkörpern H wie in Figur 5 gezeigt unterstützt diesen Effekt weiter. Entsprechendes gilt analog für das andere dem unteren Schneidmesser 610" zugeordneten Verbindungselement 100".

In Figur 6 ist eine weitere Ausführungsform der erfindungsgemässen Verbindungselemente 100, 100', 100" in einem eingebauten Zustand schematisch dargestellt. Dabei ist der Hauptkörper H des dem oberen Schneidmesser 610' zugeordneten Verbindungselements 100' transparent dargestellt. Der von dem unteren Messerkopf 700" stammende Anschluss 730" ist ausserhalb des zugehörigen Verbindungselement 100" dargestellt.

Die von den Messerköpfen 700', 700" stammenden Anschlüsse 730', 730" sind nur teilweise gezeigt, insbesondere ist nur der in der Aufnahme 120 aufnehmbare Bereich dargestellt. Insbesondere ist daraus eine umlaufende Kontur 735" am Anschluss 730" des unteren Messerkopfs 700" erkennbar. Eine entsprechend ausgebildete, insbesondere umlaufende, Kontur 735' des Anschlusses 730' des oberen Messerkopfs 700' ist auch im eingebauten Verbindungselement 100' das dem oberen Schneidmesser 610' zugeordnet ist ersichtlich. Die umlaufende Kontur 735', 735" kann dabei zumindest im Wesentlichen einer umlaufenden Nut entsprechen. Die umlaufende Nut kann dabei vorteilhafterweise einen zumindest im Wesentlichen V-förmigen Querschnitt aufweisen.

Die Länge der Aufnahme 120 und die Position der umlaufenden Kontur 735', 735" auf dem Anschluss 730', 730" sind derart ausgebildet, dass eine in die Gewindebohrung eingebrachte Fixiereinrichtung 400, insbesondere ein Gewindestift 400a, bevorzugt eine Schraube, in Eingriff mit der umlaufenden Kontur 735', 735" kommt oder ist.

Vorzugsweise ist der von den Seitenflächen der V-förmigen Nut eingeschlossene Winkel steiler (also kleiner) als die Fixiereinrichtung 400, insbesondere der Gewindestift 400a, bevorzugt die Schraube. Dadurch kann der Anschluss 730', 730" des Messerkopfs 700', 700" besonders sicher in dem Anschluss 730', 730" befestigt werden, insbesondere verspannt sich dadurch der Anschluss 730', 730" des Messerkopfs 700', 700" durch Verbiegung zusätzlich in der Aufnahme 120.

In den in Figuren 3 bis 5 gezeigten Ausführungsformen der Verbindungselemente 100, 100', 100" weisen die Hauptkörper H auf den einander zugewandten zweiten Seiten zumindest im Wesentlichen eine ebene Gleitfläche auf, an derer die benachbarten Verbindungselemente 100, 100', 100" im Betrieb gleiten können.

Im Unterschied dazu zeigt die Ausführungsform der Verbindungselemente 100, 100', 100" gemäss der Figur 6 auf den einander zugewandten zweiten Seiten der Hauptkörper H erste und zweite Führungsrippen 140', 140". Die erste Führungsrippe 140" ist insbesondere dem dem unteren Schneidmesser 610" zugeordneten Verbindungselement 100" zugeordnet und die zweite Führungsrippe 140' entsprechend dem dem oberen Schneidmesser 610' zugeordneten Verbindungselement 100'.

Insbesondere sind die Führungsrippen 140', 140" derart ausgebildet, dass sie sich seitlich in Gleitlagerachsenrichtung Y weiter erstrecken, als die in bspw. Figur 4 gezeigten Bereiche der zylindrisch geformten Abschnitte 210 der Zapfen 200, die einander gegenüberliegen. Mit anderen Worten, die erste und zweite Führungsrippe 140', 140" sind im Betrieb dazu ausgebildet, aneinander zu gleiten. Gleichzeitig stellen sie die erst mögliche Kontaktfläche zwischen den Verbindungselementen 100, 100', 100" im Betrieb dar. Somit kann ein Verkanten der Verbindungselemente 100, 100', 100" aneinander vorteilhafterweise verhindert werden.

In Figur 6 ist ferner eine Gleitbuchse 300 angedeutet, welche in zylindrischen Gleitlager 110 des Hauptkörpers H des dem oberen Schneidmesser 610' zugeordneten Verbindungselement 100' angeordnet ist. In der Gleitbuchse 300 ist wiederum der zylindrisch geformte Abschnitt 210 des Zapfens 200 aufgenommen und gelagert. Eine entsprechende Gleitbuchse 300 kann auch in dem dem unteren Schneidmesser 610" zugeordneten Verbindungselement 100" angeordnet sein.

Wie in Figur 6 ersichtlich, ist der konisch geformte Abschnitt 220 des Zapfens 200 des dem oberen Schneidmesser 610' zugeordneten Verbindungselements 100' in dem Verbindungsarm 800' aufgenommen. Dabei kann die den konisch geformten Abschnitt 220 aufnehmende Öffnung in dem Verbindungsarm 800'zumindest im Wesentlichen zylindrisch geformt sein. Somit kann ein Spiel des Zapfens 200 und damit eine leichte Relativbewegung zwischen Zapfen 200 und damit dem Verbindungselement 100' und dem Verbindungsarm 800' bereitgestellt werden. Dies verhindert ein Verklemmen des Zapfens 200 im Betrieb.

In Figur 6 ist die Mutter sowie gegebenenfalls Gleit- und/oder Beilagsscheiben, die zum Befestigen des Verbindungselements 100' an dem Verbindungsarm 800' verwendet werden nicht dargestellt. Diese kann auf den Befestigungsabschnitt 240 des Zapfens 200 geschraubt werden und so das Verbindungselement 100' an dem Verbindungsarm 800' befestigen.

Am anderen Ende des Zapfens 240 des dem unteren Schneidmesser 610" zugeordneten Verbindungselement 100" ist in Figur 6 ein Befestigungselement 500 in Form eines Sprengrings angedeutet. Dieses kann eine axiale Verschiebung des Hauptkörpers H - insbesondere zusammen mit der Gleitbuchse 300 - über den Zapfen 200 hinaus verhindern.

In Figur 6 ist auch eine schematische Darstellung eines isolierten Zapfens 200 gezeigt. Der Zapfen 200 weist dabei einen Befestigungsabschnitt 240, einen daran benachbart angeordneten konisch geformten Abschnitt 220, einen daran benachbart angeordneten Anschlag 230 und einen daran benachbart angeordneten zylindrisch geformten Abschnitt 210 auf.

Der in Figur 6 dargestellte Anschlag 230 kann als ringförmige Erhebung ausgebildet sein. Insbesondere kann der Anschlag 230 eine Gleitfläche zu dem Verbindungsarm 800', 800" ausbilden. Alternativ ist es auch möglich, den Anschlag 230 zumindest im Wesentlichen mit dem gleichen Durchmesser wie den zylindrisch geformten Abschnitt 210 auszubilden. Insbesondere kann dieser Durchmesser ein bisschen grösser (beispielsweise mindestens einen Millimeter oder mindestens zwei Millimeter grösser) als der Durchmesser der den konisch geformten Abschnitt 220 des Zapfens 200 aufnehmenden Öffnung des Verbindungsarm 800', 800" ausgebildet sein. Insofern kann der Anschlag auch als Bund bezeichnet werden.

Wie in der Darstellung des Zapfens 200 in Figur 6 gezeigt ist, kann an dem dem zylindrisch geformten Abschnitt 210 zugeordneten Ende eine Nut angeordnet sein, in welche ein Befestigungselement 500, beispielsweise ein Sprengring, eingreifend angeordnet werden kann.

Ferner kann in dem dem zylindrisch geformten Abschnitt 210 zugeordneten Ende ein Hohlraum 250 angeordnet sein. Dieser dient dazu das Gewicht zu reduzieren und somit die Trägheit zu bewegenden Elemente zu reduzieren.

Der Zapfen 200 kann universell in beide Hauptkörper H der den jeweiligen Schneidmessern 610', 610" zugeordneten Verbindungselemente 100, 100', 100" in entsprechender Ausrichtung eingesetzt werden.

Es ist auch denkbar, die unterschiedlichen Ausführungsformen der Verbindungselemente 100, 100', 100" miteinander zu kombinieren, solange sich dies nicht ausschließt und der Abstand d zwischen der Aufnahmelängsachse A und der Gewindestiftlängsachse Z ausgebildet ist und somit der Torsions-Effekt erzielt wird. Beispielsweise ist es denkbar, die Führungsrippen 140', 140" auch in den Verbindungselementen 100' 100" gemäß der Figuren 3 bis 5 entsprechend anzuordnen, oder die Position der Schmiernippel 900 anzupassen.

Es ist festzuhalten, dass die unter Bezug auf einzelne Ausführungsformen bzw. -varianten beschriebenen Merkmale der Erfindung, wie beispielsweise Art und Ausgestaltung der einzelnen Komponenten sowie deren genaue Dimensionierung und räumliche Anordnung auch bei anderen Ausführungsformen vorhanden sein können, ausser wenn es anders angegeben ist oder sich aus technischen Gründen von selbst verbietet. Von derartigen, in Kombination beschriebenen Merkmalen einzelner Ausführungsformen müssen ausserdem nicht notwendigerweise alle Merkmale in einer betreffenden Ausführungsform realisiert sein.

Die vorliegende Erfindung wird durch den Gegenstand der unabhängigen Ansprüche definiert. Die abhängigen Ansprüche geben optionale Merkmale von einigen Ausführungsformen an. Zum Bestimmen des Schutzumfangs ist jedes Element, das einem in den Ansprüchen genannten Elementen gleichwertig ist, entsprechend zu berücksichtigen.

### Bezugszeichenliste

- 100: Verbindungselement
- 100': oberes Verbindungselement
- 100": unteres Verbindungselement
- H: Hauptkörper
- 110: zylindrisches Gleitlager
- 120: Aufnahme
- 140": erste Führungsrippe
- 140': zweite Führungsrippe
- 200: Zapfen
- 210: zylindrisch geformter Abschnitt
- 220: konisch geformter Abschnitt
- 230: Anschlag
- 240: Befestigungsabschnitt
- 250: Hohlraum
- 300: Gleitbuchse
- 400: Fixiereinrichtung
- 400a: Gewindestift
- 500: Befestigungselement
- 600: Doppelmesser-Schneidsystem
- 610': oberes Schneidmesser
- 620': oberes Klingenelement
- 621': Schneidkante
- 622': Schneidmesserspitze
- 625': oberer Messerrücken
- 610": unteres Schneidmesser
- 620": unteres Klingenelement
- 700': oberer Messerkopf
- 720': oberer elastischer Abschnitt
- 730': oberer Anschluss
- 735': umlaufende Kontur
- 740': oberer Verbindungsabschnitt
- 700": unterer Messerkopf
- 720": unterer elastischer Abschnitt
- 730": unterer Anschluss
- 735": umlaufende Kontur
- 740": unterer Verbindungsabschnitt
- 800': oberer Verbindungsarm zum seitlichen Antrieb
- 800": unterer Verbindungsarm zum seitlichen Antrieb
- 900: Schmiernippel
- 1000: Mähmesservorrichtung
- 1100: Messerbalken
- 1200: Haltevorrichtung
- 2000: Mähmesservorrichtungssystem
- M: Mittellinie des Hauptkörpers des Verbindungselements
- X: Klingenbewegungsrichtung
- Y: Lagerachse des Gleitlagers
- Z: Gewindestiftlängsachse
- A: Aufnahmelängsachse
- d: Abstand zwischen Gewindestiftlängsachse Z und Aufnahmelängsachse A

## Patentansprüche

1. Mähmesservorrichtung (1000) mit einem Doppelmesser-Schneidsystem (600), wobei das Doppelmesser-Schneidsystem (600) ein oberes Schneidmesser (610') und ein unteres Schneidmesser (610") aufweist, welche mittels eines seitlichen Antriebs in einer Klingenbewegungsrichtung (X) relativ zueinander bewegbar ausgebildet sind, wobei
das obere Schneidmesser (610') und/oder das untere Schneidmesser (610") jeweils ein Verbindungselement (100, 100', 100") zum Übertragen einer Antriebsbewegung mittels eines seitlichen Antriebs aufweist, wobei
das Verbindungselement (100, 100', 100") ein zylindrisches Gleitlager (110) umfasst, welches sowohl eine Rotationsgleitbewegung und eine Axialgleitbewegung zulässt.

2. Mähmesservorrichtung (1000) gemäss Anspruch 1, wobei das zylindrische Gleitlager (110) eine Lagerachse (Y) aufweist, welche orthogonal zur Klingenbewegungsrichtung (X) ausgerichtet ist.

3. Mähmesservorrichtung (1000) gemäss Anspruch 1 oder 2, wobei das zylindrische Gleitlager (110) einen in dem zylindrischen Gleitlager (110) gleitfähig gelagerten Zapfen (200) umfasst, welcher form- und kraftschlüssig an einem seitlichen Antrieb fixierbar ist.

4. Mähmesservorrichtung (1000) gemäss Anspruch 3, wobei der Zapfen (200) einen konisch geformten Abschnitt (220) zum Einbringen in einen Verbindungsarm (800' 800") des seitlichen Antriebs umfasst.

5. Mähmesservorrichtung (1000) gemäss Anspruch 4, wobei der Zapfen (200) einen Anschlag (230) umfasst, welcher angrenzend an den konisch geformten Abschnitt (220) ausgebildet ist.

6. Mähmesservorrichtung (1000) gemäss einem der Ansprüche 3 bis 5, wobei der Zapfen (200) einen Hohlraum (250) aufweist.

7. Mähmesservorrichtung (1000) gemäss einem der Ansprüche 3 bis 6, wobei zwischen dem zylindrischen Gleitlager (110) und dem Zapfen (200) eine Gleitbuchse (300) angeordnet ist.

8. Mähmesservorrichtung (1000) gemäss einem der vorstehenden Ansprüche, wobei das Verbindungselement (100, 100', 100") eine Aufnahme (120) zum Anordnen des Verbindungselements (100, 100', 100") an einem Messerkopf (700', 700") eines Schneidmessers (610', 610") aufweist.

9. Mähmesservorrichtung (1000) gemäss Anspruch 8, wobei das Verbindungselement (100, 100', 100") eine Fixiereinrichtung (400) zum Fixieren des in die Aufnahme (120) eingebrachten Messerkopfs (700', 700") eines Schneidmessers (610', 610") aufweist.

10. Mähmesservorrichtung (1000) gemäss Anspruch 8 und 9, wobei die Aufnahme (120) eine im Wesentlichen parallel zur Klingenbewegungsrichtung (X) ausgerichtete Aufnahmelängsachse (A) umfasst, wobei die Fixiereinrichtung (400) einen Gewindestift (400a) mit einer Gewindestiftlängsachse (Z) umfasst, und wobei die Gewindestiftlängsachse (Z) und die Aufnahmelängsachse (A) voneinander beabstandet ausgebildet sind.

11. Mähmesservorrichtung (1000) nach einem der vorstehenden Ansprüche, wobei das untere Schneidmesser (610") ein unteres Verbindungselement (100") und das obere Schneidmesser (610') ein oberes Verbindungselement (100') aufweisen, wobei das untere Verbindungselement (100") und das obere Verbindungselement (100') jeweils ein zylindrisches Gleitlager (110) umfassen, welche sowohl eine Rotationsgleitbewegung und eine Axialgleitbewegung zulassen.

12. Mähmesservorrichtung (1000) nach Anspruch 11, wobei das untere Verbindungselement (100") eine erste Führungsrippe (140") und das obere Verbindungselement (100') eine zweite Führungsrippe (140') aufweisen, wobei die erste Führungsrippe (140") und die zweite Führungsrippe (140') zueinander ausgerichtete Gleitflächen aufweisen.

13. Mähmesservorrichtungssystem (2000) mit:
einer Mähmesservorrichtung (1000) nach einem der vorstehenden Ansprüche, wobei
das obere Schneidmesser (610') und das untere Schneidmesser (610") jeweils einen Messerkopf (700', 700") zum Anordnen des oberen Verbindungselements (100') und des unteren Verbindungselements (100") aufweisen, wobei
jeder Messerkopf eine Kontur (735', 735") zum Wechselwirken mit einer respektive der Fixiereinrichtung (400) des jeweiligen Verbindungselements (100', 100") umfasst.

14. Mähmesservorrichtungssystem (2000) nach Anspruch 13, wobei die Kontur (735', 735") als umlaufende Nut ausgebildet ist, wobei die Fixiereinrichtung (400) zumindest teilweise in die umlaufende Nut einbringbar ist.

15. Mähmesservorrichtungssystem (2000) nach Anspruch 14, wobei die umlaufende Nut einen steileren Winkel aufweist als ein Ende der Fixiereinrichtung (400), welches zumindest teilweise in die umlaufende Nut einbringbar oder eingebracht ist.
